# EUROPEAN PATENT APPLICATION

(11) **EP 4 517 253 A1**
(43) Date of publication of application: **05.03.2025**
(21) Application number: 22964767.2
(22) Date of filing: 09.11.2022
(51) Int. Cl.: G01B 7/16

(54) **ELECTRICALLY CONDUCTIVE STRUCTURE AND FLEXIBLE SENSOR WITH ELECTRICALLY CONDUCTIVE STRUCTURE**

(71) Applicant: Shenzhen Shokz Co., Ltd., Shenzhen, Guangdong 518108 (CN)
(72) Inventor: HUANG, Yujia, Shenzhen, Guangdong 518108 (CN); DENG, Wenjun, Shenzhen, Guangdong 518108 (CN); YUAN, Yongshuai, Shenzhen, Guangdong 518108 (CN); ZHOU, Wenbing, Shenzhen, Guangdong 518108 (CN); LIAO, Fengyun, Shenzhen, Guangdong 518108 (CN); QI, Xin, Shenzhen, Guangdong 518108 (CN)
(74) Representative: Wang, Bo
(86) International application number: PCT/CN2022/130939
(87) International publication number: WO 2024/098293

(57) **Abstract**

The embodiments of the present disclosure provide a conductive structure (100) and a flexible sensor (700) having the same. The conductive structure (100) may comprise: a substrate (110), including an accommodation groove (112); a solid conductor (120), at least partially accommodated in the accommodation groove (112), the solid conductor (120) and the accommodation groove (112) forming a first accommodation region (140); and a fluid conductor (130), filled in the first accommodation region (140) and extending outside the accommodation groove (112), a projection of a contact region between the fluid conductor (130) and the solid conductor (120) along a depth direction of the accommodation groove (112) and a projection of the solid conductor (120) along the depth direction having an overlapping region. The flexible sensor (700) comprises at least one sensing structure (710). Each of the at least one sensing structure (710) may include: two electrode plates (711), the two electrode plates (711) being disposed opposite to each other; and a dielectric flexible body (712), disposed between at least two electrode plates (711), the dielectric flexible body (712) deforming under action of an external force to change electrical signals of the two electrode plates (711). The flexible sensor (700) further comprises a processor, configured to determine a deformation of the flexible sensor (700) based on the electrical signals of the two electrode plates (711). Each of the two electrodes includes the conductive structure (100).

## Description

### TECHNICAL FIELD

The present disclosure relates to the technical field of electronic components, and in particular to a conductive structure and a flexible sensor having the same.

### BACKGROUND

As the broad application prospects, flexible electronic devices have become one of the hot spots in the market and technology fields in recent years. Since flexible electronic devices can not only meet human requirements for wearable devices or implantable devices, but are also necessary parts for making flexible robots, the development of high-precision flexible sensors is of great significance.

In order to improve stability and deformation ability, the conductive structure of the flexible sensor may include a fluid conductor at the room temperature as a conductive component and a solid conductor in contact with the fluid conductor. However, due to a large difference between the deformation ability of the fluid and the deformation ability of the solid, in the existing flexible sensors, the accuracy of the conductive structure is greatly affected by external factors (e.g., the pressure, etc.), and the change of electrical properties at the junction of the solid conductor and the fluid conductor is greatly affected by the change of the shape at the junction, which causes instability and distortion of the output electrical signal of the conductive structure.

### SUMMARY

One of the embodiments of the present disclosure provides a conductive structure. The conductive structure may comprise a substrate, including an accommodation groove; a solid conductor, at least partially accommodated in the accommodation groove, the solid conductor and the accommodation groove forming a first accommodation region; and a fluid conductor, filled in the first accommodation region and extending outside the accommodation groove, a projection of a contact region between the fluid conductor and the solid conductor along a depth direction of the accommodation groove and a projection of the solid conductor along the depth direction having an overlapping region.

In some embodiments, the solid conductor may include a first conductor portion and a second conductor portion. The first conductor portion and the second conductor portion may form a step structure.

In some embodiments, the fluid conductor may contact with a plurality of surfaces of the step structure. The plurality of surfaces may include a first horizontal contact surface of the second conductor portion facing the first conductor portion, a first vertical contact surface of the second conductor portion facing the first accommodation region, and a second vertical contact surface of the first conductor portion facing the first accommodation region.

In some embodiments, the first conductor portion may be bonded and connected above the second conductor portion, and the second conductor portion may be bonded and connected on a bottom wall of the accommodation groove or may be suspended in the accommodation groove.

In some embodiments, projections of the first conductor portion and the second conductor portion along the depth direction of the accommodation groove may have a non-overlapping region.

In some embodiments, the solid conductor and the accommodation groove may further form a second accommodation region. The second accommodation region may be communicated with the first accommodation region to accommodate the fluid conductor.

In some embodiments, a projection of the second accommodation region along the depth direction of the accommodation groove and the projection of the solid conductor along the depth direction of the accommodation groove may have a second overlapping region.

In some embodiments, the solid conductor may include a conductive tape that is absorbent to the fluid conductor.

In some embodiments, the solid conductor may include a metal electrode or a conductive coating. The conductive coating may be made of an elastomer paste and at least one of graphite, carbon powder, or conductive nanoparticles.

In some embodiments, the fluid conductor may include liquid metal or conductive oil.

In some embodiments, an inner wall of the accommodation groove may be provided with a rough structure.

One of the embodiments of the present disclosure further provides a flexible sensor. The flexible sensor may comprise at least one sensing structure, each of the at least one sensing structure including: two electrode plates which are disposed opposite to each other; and a dielectric flexible body disposed between the two electrode plates, the dielectric flexible body deforming under action of an external force to change electrical signals of the two electrode plates; each of the two electrode plates including a conductive structure, the conductive structure including: a substrate, including an accommodation groove; a solid conductor, at least partially accommodated in the accommodation groove, the solid conductor and the accommodation groove forming a first accommodation region; and a fluid conductor, filled in the first accommodation region and extending outside the accommodation groove, a projection of a contact region between the fluid conductor and the solid conductor along a depth direction of the accommodation groove and a projection of the solid conductor along the depth direction having an overlapping region.

In some embodiments, the at least one sensing structure may include a first sensing structure and a second sensing structure. The first sensing structure and the second sensing structure may be disposed on opposite sides of a flexible matrix, respectively. The flexible sensor may further comprise a processor. The processor may be configured to determine a deformation of the flexible sensor based on an electrical signal generated by the first sensing structure and an electrical signal generated by the second sensing structure.

### BRIEF DESCRIPTION OF THE DRAWINGS

The present disclosure will be further illustrated by way of exemplary embodiments, which will be described in detail by means of the accompanying drawings. These embodiments are not limiting, and in these embodiments, the same numbering indicates the same structure, where:
FIG. 1 is a schematic diagram illustrating an exemplary conductive structure according to some embodiments of the present disclosure;
FIG. 2A is a schematic diagram illustrating an exemplary conductive structure in an unstressed state according to some embodiments of the present disclosure;
FIG. 2B is a schematic diagram illustrating the conductive structure in FIG. 2A in a stressed state;
FIG. 2C is a schematic diagram illustrating an exemplary conductive structure in a stressed state according to some embodiments of the present disclosure;
FIG. 2D is a schematic diagram illustrating an exemplary conductive structure in a stressed state according to some embodiments of the present disclosure;
FIG. 3A is a schematic structural diagram illustrating another exemplary conductive structure according to some embodiments of the present disclosure;
FIG. 3B is a top view of the conductive structure in FIG. 3A;
FIGs. 4A-4D are schematic diagrams illustrating a process flow of an exemplary conductive structure according to some embodiments of the present disclosure;
FIGs. 5A-5D are schematic diagrams illustrating a process flow of another exemplary conductive structure according to some embodiments of the present disclosure;
FIGs. 6A-6D are schematic diagrams illustrating a process flow of another exemplary conductive structure according to some embodiments of the present disclosure;
FIG. 7A is a schematic structural diagram illustrating an exemplary flexible capacitive sensor according to some embodiments of the present disclosure;
FIG. 7B is a schematic structural diagram illustrating another exemplary flexible capacitive sensor according to some embodiments of the present disclosure;
FIG. 8A is a schematic structural diagram illustrating an exemplary flexible resistive sensor according to some embodiments of the present disclosure; and
FIG. 8B is a schematic structural diagram illustrating another exemplary flexible resistive sensor according to some embodiments of the present disclosure.

### DETAILED DESCRIPTION

In order to more clearly illustrate the technical solutions of the embodiments of the present disclosure, the accompanying drawings required to be used in the description of the embodiments are briefly described below. Obviously, the accompanying drawings in the following description are only some examples or embodiments of the present disclosure, and it is possible for a person of ordinary skill in the art to apply the present disclosure to other similar scenarios in accordance with these drawings without creative labor. Unless obviously obtained from the context or the context illustrates otherwise, the same numeral in the drawings refers to the same structure or operation

It should be understood that the terms "system," "device," "unit" and/or "module" used herein are a way to distinguish between different components, elements, parts, sections, or assemblies at different levels. However, the terms may be replaced by other expressions if other words accomplish the same purpose.

As shown in the present disclosure and the claims, unless the context clearly suggests an exception, the words "one," "a," "an," "one kind," and/or "the" do not refer specifically to the singular, but may also include the plural. Generally, the terms "including" and "comprising" suggest only the inclusion of clearly identified steps and elements, however, the steps and elements that do not constitute an exclusive list, and the method or apparatus may also include other steps or elements.

Flowcharts are used in the present disclosure to illustrate the operations performed by a system according to embodiments of the present disclosure, and the related descriptions are provided to aid in a better understanding of the magnetic resonance imaging method and/or system. It should be appreciated that the preceding or following operations are not necessarily performed in an exact sequence. Instead, steps can be processed in reverse order or simultaneously. Also, it is possible to add other operations to these processes or to remove a step or steps from these processes.

In order to improve stability and deformation ability, a conductive structure of a flexible sensor may include a fluid conductor at the room temperature and a solid conductor. The fluid conductor can well match the deformation of the flexible sensor. However, due to a large difference between the deformation ability of the fluid and the deformation ability of the solid, when the conductive structure of the flexible sensor is deformed by external factors (e.g., pressure, etc.), the change of the shape at the junction of the fluid conductor and the solid conductor has a great impact on the change of electrical properties at the junction, resulting in instability and distortion of an output electrical signal of the conductive structure.

The present disclosure provides a conductive structure and a flexible sensor. The conductive structure may include a substrate, a solid conductor, and a fluid conductor. The substrate may include an accommodation groove. The solid conductor may be at least partially accommodated in the accommodation groove of the substrate. The solid conductor and the accommodation groove may form a first accommodation region. The fluid conductor may be filled in the first accommodation region and extend outside the accommodation groove. A projection of a contact region between the fluid conductor and the solid conductor along a depth direction of the accommodation groove and a projection of the solid conductor along the depth direction may have an overlapping region. In other words, a plurality of non-coplanar contact surfaces may exist between the solid conductor and the fluid conductor simultaneously, such as a horizontal contact surface (e.g., a horizontal surface or an inclined surface, etc.) and a vertical contact surface, thereby increasing a contact area between the solid conductor and the fluid conductor. The structural setting of the first accommodation region and the horizontal contact surface can ensure that when the conductive structure (e.g., a contact position between the solid conductor and the fluid conductor) deforms under action of an external pressure, if the fluid conductor undergoes a large-scale offset under the external pressure, the fluid conductor in the first accommodation region can supplement the fluid conductor at the offset position to avoid disconnection between the fluid conductor and the solid conductor, thereby preventing a large change in the contact impedance between the fluid conductor and the solid conductor, and improving the stability of the output electrical signal of the conductive structure.

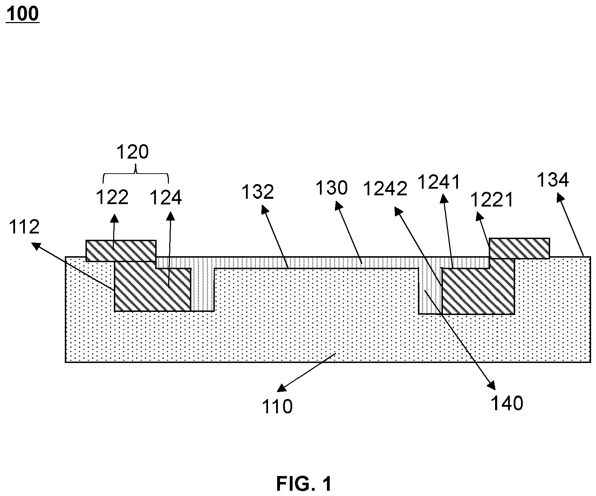

FIG. 1 is a schematic diagram illustrating an exemplary conductive structure according to some embodiments of the present disclosure. As shown in FIG. 1, in some embodiments, a conductive structure 100 may include a substrate 110, a solid conductor 120, and a fluid conductor 130.

The substrate 110 may be used as a mounting base to provide a supporting and mounting platform for other components (e.g. the fluid conductor 130 and the solid conductor 120) of the conductive structure 100. In some embodiments, an accommodation groove 112 may be disposed on the substrate 110. The solid conductor 120 may be at least partially accommodated in the accommodation groove 112. For example, the solid conductor 120 may be fixedly mounted (e.g., bonded) in the accommodation groove 112. In some embodiments, a first accommodation region 140 may be formed between the solid conductor 120 and the accommodation groove 112. The fluid conductor 130 may be filled in the first accommodation region 140 and extend outside the accommodation groove 112 to achieve connection and contact with the solid conductor 120. The solid conductor 120 may be used as an external terminal of the fluid conductor 130 to output an electrical signal of the fluid conductor 130 to an external circuit (e.g., a processor).

For example, the conductive structure 100 may include two accommodation grooves 112 disposed at two ends of the substrate 110. Each of the two accommodation grooves 112 may be provided with a solid conductor 120. The solid conductor 120 and the corresponding accommodation groove 112 may form the first accommodation region 140. The fluid conductor 130 may be accommodated between the two first accommodation regions 140. In this way, the fluid conductor 130 may realize electrical conduction between the two solid conductors 120, or the fluid conductor 130 may be connected to the external circuit (e.g., the processor) through the two solid conductors 120. It should be noted that in the embodiments of the present disclosure, when the conductive structure 100 is connected to the external circuit, as long as the electrical connection between the conductive structure 100 and the external circuit is guaranteed, a connection position between a wire of the external circuit and the solid conductor 120 of the conductive structure 100 is not limited in the present disclosure.

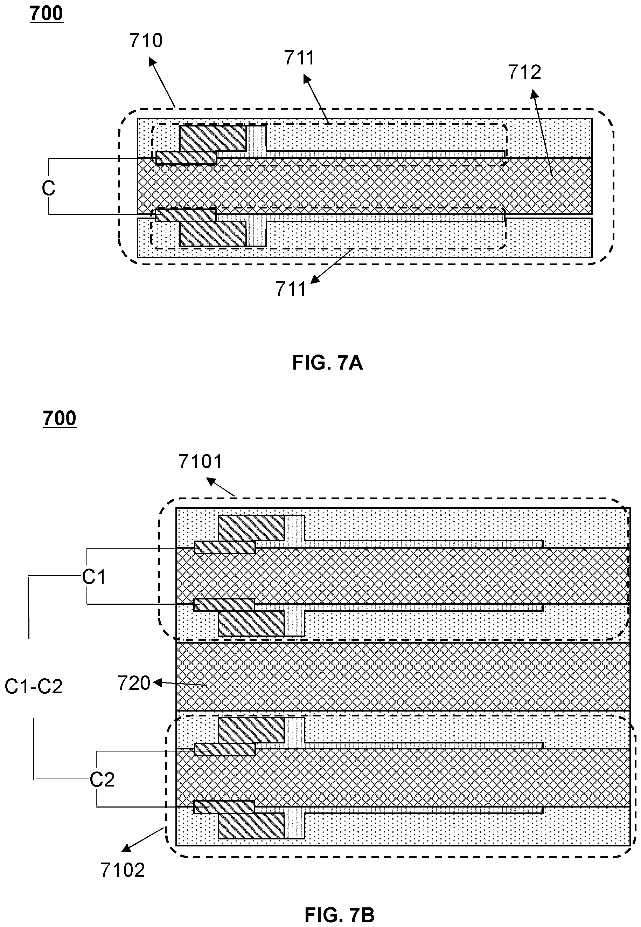

In some embodiments, as shown in FIG. 1, an upper surface 132 of the substrate 110 between the two first accommodation regions 140 may be lower than upper surfaces 134 at the two ends of the substrate 110. That is, a groove may be provided on the substrate 110 to accommodate the fluid conductor 130 extending outside the accommodation groove 112. In some embodiments, when a plurality of accommodation grooves 112 are provided on the substrate 110, the groove may be communicated with the plurality of accommodation grooves 112 simultaneously, such that different portions of the fluid conductor 130 can be connected in a circuit. It should be noted that in some embodiments, the substrate 110 may include only one accommodation groove 112. The substrate 110 may be provided with a barrier or a groove such that the fluid conductor 130 can extend outside the accommodation groove 112 without overflowing the substrate 110. For example, as shown in FIG. 7A, when the conductive structure is used as an electrode plate 711 of a capacitor, the substrate may include only one accommodation groove and only one solid conductor.

In some embodiments, an inner wall of the accommodation groove 112 and/or the groove may also be provided with a rough structure. In other words, the inner wall of the accommodation groove 112 and/or the groove may have a certain degree of roughness. For example, the roughness of the inner wall of the accommodation groove 112 and/or the groove may be increased by laser, hot pressing, photolithography, and other processes. The rough structure may increase the friction between the solid conductor 120 and the inner wall of the accommodation groove 112 and/or the groove, thereby increasing the difficulty of moving the solid conductor 120 and enhancing the mounting and connection strength of the solid conductor 120. Meanwhile, the rough structure may also increase a contact force between the fluid conductor 130 and the inner wall of the accommodation groove 112 and/or the groove, which increases the difficulty of transferring the fluid conductor 130, thereby enhancing the deformation resistance of the fluid conductor 130. In addition, the rough structure may increase a contact area between the fluid conductor 130 and the inner wall of the accommodation groove 112 and/or the groove. In this case, the rough structure may be composed of a plurality of small accommodation regions. Each of the plurality of small accommodation regions may play the same role as the first accommodation region 140. When the fluid conductor 130 undergoes a large-scale offset, the plurality of small accommodation regions may be used for supplementing, thereby making the amount of the fluid conductor 130 near the rough structure more stable and less prone to deviate.

The first accommodation region 140 may be provided to supplement the fluid conductor 130 when the fluid conductor 130 undergoes a large-scale offset, so as to well avoid disconnection between the fluid conductor 130 and the solid conductor 120, thus preventing a large change in the contact impedance between the fluid conductor 130 and the solid conductor 120, and improving the stability of the output electrical signal of the conductive structure 100. In some embodiments, a projection of a contact region between the fluid conductor 130 and the solid conductor 120 along the depth direction of the accommodation groove 112 and a projection of the solid conductor 120 along the depth direction of the accommodation groove 112 may have an overlapping region. That is, a horizontal contact surface may exist between the solid conductor 120 and the fluid conductor 130. In the embodiments of the present disclosure, the horizontal contact surface between the solid conductor 120 and the fluid conductor 130 refers to that a projection of a contact surface between the solid conductor 120 and the fluid conductor 130 on a horizontal plane perpendicular to the depth direction has a certain area. For example, the horizontal contact surface between the solid conductor 120 and the fluid conductor 130 may be perpendicular to the depth direction of the accommodation groove 112, i.e., parallel to the horizontal plane. As another example, the horizontal contact surface between the solid conductor 120 and the fluid conductor 130 may be an inclined surface having a certain angle with respect to the depth direction (or a horizontal plane direction) of the accommodation groove 112. In some embodiments, in order to allow the solid conductor 120 and the fluid conductor 130 to have the horizontal contact surface, the solid conductor 120 may include but is not limited to a stepped solid conductor or a wedge-shaped solid conductor.

In some embodiments, since the solid conductor 120 needs to act as a solid electrode (or a lead) of the fluid conductor 130 to connect the fluid conductor 130 to the external circuit, the conductive structure 100 needs to be provided such that the lead connected with the solid conductor 120 extends outside the substrate 110 or the solid conductor 120 directly extends outside the substrate 110. In order to facilitate the lead or the solid conductor 120 to extend outside the substrate 110, the solid conductor 120 and the accommodation groove 112 may be disposed at an edge of the substrate 110.

In some embodiments, as shown in FIG. 1, the solid conductor 120 may include a first conductor portion 122 and a second conductor portion 124. The second conductor portion 124 may be bonded on a bottom wall of the accommodation groove 112 or suspended in the accommodation groove 112 for connect and contact with the fluid conductor 130. The first conductor portion 122 may be bonded on the second conductor portion 124 to prevent the fluid conductor 130 from overflowing. In some embodiments, a portion of the first conductor portion 122 extending into the accommodation groove 112 may be connected with (e.g., by bonding or integral molding of the first conductor portion 122 and the second conductor portion 124) an upper surface of the second conductor portion 124, and a region of a lower surface of the first conductor portion 122 not connected with the second conductor portion 124 may be fixed on the substrate 110 near an opening of the accommodation groove 112, such that a lower surface of the second conductor portion 124 can not contact the bottom wall of the accommodation groove 112, i.e., the second conductor portion 124 may be suspended relative to the accommodation groove 112. In this case, the fluid conductor 130 may be filled between the lower surface of the second conductor portion 124 and the bottom wall of the accommodation groove 112. In the embodiments of the present disclosure, the second conductor portion 124 being suspended relative to the accommodation groove 112 means that the lower surface of the second conductor portion 124 does not contact the bottom wall of the accommodation groove 112, and the second conductor portion 124 may contact or not contact with a side wall of the accommodation groove 112. It should be noted that in the embodiments of the present disclosure, the first conductor portion 122 and the second conductor portion 124 may also be arranged in other ways, as long as the first conductor portion 122 and the second conductor portion 124 cooperate to contact the fluid conductor 130 and prevent the fluid conductor 130 from overflowing. For example, a left side (or a right side) of the first conductor portion 122 may be connected to a right side (or a left side) of the second conductor portion 124. As another example, the first conductor portion 122 and the second conductor portion 124 may be any shape that can cooperate and connect with each other. As another example, the first conductor portion 122 and the second conductor portion 124 may also be integrally molded. For ease of description, the present disclosure is described by taking a mode that the first conductor portion 122 and the second conductor portion 124 are arranged vertically, which does not limit the scope of the present disclosure.

In some embodiments, the first conductor portion 122 and the second conductor portion 124 may form a step structure. The fluid conductor 130 may contact with a plurality of surfaces of the step structure, thereby increasing a contact surface area between the solid conductor 120 and the fluid conductor 130, and ensuring the stability of the conductive structure 100 in conduction (or signal transmission).

In some embodiments, a liquid level of the fluid conductor 130 may be higher than the upper surface 132 of the substrate 110 between the two first accommodation regions 140, and lower than upper surfaces 134 at two ends of the substrate 110. The upper surfaces 134 at the two ends of the substrate 110 may intercept the fluid conductor 130 to prevent the fluid conductor 130 from overflowing. In some embodiments, the liquid level of the fluid conductor 130 may be higher than an upper surface of the second conductor portion 124, and lower than an upper surface of the first conductor portion 122. In this case, the second conductor portion 124 may be completely immersed in the fluid conductor 130, and the first conductor portion 122 may be partially immersed in the fluid conductor 130. In some embodiments, the upper surface 132 of the substrate 110 between the two first accommodation regions 140 may be lower than the upper surface of the second conductor portion 124. The liquid level of the fluid conductor 130 may be higher than the lower surface of the second conductor portion 124, and the liquid level of the fluid conductor 130 may be lower than the upper surface of the second conductor portion 124. In this case, the second conductor portion 124 may be partially immersed in the fluid conductor 130, and the first conductor portion 122 may not be immersed in the fluid conductor 130. In this case, the conductive structure 100 may include only the second conductor portion 124 but not the first conductor portion 122.

In some embodiments, the plurality of contact surfaces between the fluid conductor 130 and the step structure (i.e., the solid conductor 120 ) may include a first horizontal contact surface 1241 of the second conductor portion 124 facing the first conductor portion 122, a first vertical contact surface 1242 of the second conductor portion 124 facing the first accommodation region 140, and a second vertical contact surface 1221 of the first conductor portion 122 facing the first accommodation region 140. In this case, since the first conductor portion 122 can block the fluid conductor 130 and prevent the fluid conductor 130 from overflowing, a contact area between the fluid conductor 130 and the solid conductor 120 at the second vertical contact surface 1221 may be less than that at the first horizontal contact surface 1241 and the first vertical contact surface 1242. When the fluid conductor 130 deforms, the contact area between the fluid conductor 130 and the solid conductor 120 at the second vertical contact surface 1221 may change slightly. Even if the connection between the fluid conductor 130 and the solid conductor 120 at the second vertical contact surface 1221 is disconnected, the effect on the change of impedance at the connection position between the fluid conductor 130 and the solid conductor 120 may be weak and may be basically ignored.

In some embodiments, the projections of the first conductor portion 122 and the second conductor portion 124 along the depth direction of the accommodation groove 112 may have a non-overlapping region. In some embodiments, one end of the first conductor portion 122 away from the fluid conductor 130 may extend outside the second conductor portion 124. That is, the first conductor portion 122 and the second conductor portion 124 may form a Z-shaped step structure. In this case, the first conductor portion 122 may be partially connected with the substrate 110 to strengthen the connection relationship between the first conductor portion 122 and the substrate 110 (i.e., increase the contact area between the solid conductor 120 and the substrate 110), such that the solid conductor 120 is more firmly mounted on the substrate 110, and the reliability of the conductive structure 100 is enhanced. In some embodiments, the first conductor portion 122 may be disposed on a region close to an end of the substrate 110, i.e., a region of the substrate 110 between the accommodation groove 112 and the end of the substrate 110. In some embodiments, the first conductor portion 122 may also be disposed in a region between the two accommodation grooves 112 on the substrate 110. In this case, a height of the second conductor portion 124 may be less than a depth of the accommodation groove 112, the liquid level of the fluid conductor 130 may be lower than the depth of the accommodation groove 112, and the liquid level of the fluid conductor 130 may be less than a sum of thicknesses of the first conductor portion 122 and the second conductor portion 124. That is, the second conductor portion 124 may be completely immersed in the fluid conductor 130, the first conductor portion 122 may be partially immersed in the fluid conductor 130, and a region of the substrate 110 corresponding to a side wall of the accommodation groove 112 may intercept the fluid conductor 130 to prevent the fluid conductor 130 from overflowing.

In some embodiments, the solid conductor 120 may be any solid with conductive properties. In some embodiments, a surface of the solid conductor 120 may also have a certain degree of roughness to increase the contact force between the solid conductor 120 and the fluid conductor 130 and improve the stability of the contact between the fluid conductor 130 and the solid conductor 120. For example, the surface of the solid conductor 120 may include a pore structure to absorb the fluid. As another example, the surface of the solid conductor 120 may include a convex structure to increase the contact area between the solid conductor 120 and the fluid conductor 130, thereby increasing the contact force between the solid conductor 120 and the fluid conductor 130. In some embodiments, the solid conductor 120 may include a conductive tape that is absorbent to the fluid conductor 130. The conductive tape may have a degree of roughness and a certain degree of wettability. When the conductive structure 100 is subjected to external pressure, the fluid conductor 130 may be infiltrated into the conductive tape and absorbed by the conductive tape, making it less likely for the fluid conductor 130 to deviate. In some embodiments, the solid conductor 120 may also include a metal electrode or a conductive coating. The conductive coating may be made of an elastomer paste and at least one of graphite, carbon powder, or conductive nanoparticles. In some embodiments, the elastomer paste may include but is not limited to thermoplastic polyurethane rubber (TPU), ethylene-vinyl acetate copolymer (EVA), polydimethylsiloxane (PDMS), Ecoflex, resin, a silicone polymer material, etc. In some embodiments, the material of the first conductor portion 122 and the material of the second conductor portion 124 may be the same or different, which are not limited in the present disclosure.

In some embodiments, the fluid conductor 130 may include a fluid having conductive properties such as liquid metal or conductive oil, such as gallium-based liquid metal, conductive carbon paste, conductive ink, conductive silicone, or other fluids based on conductors and non-conductors doped with organic solvents.

In some embodiments, in order to match the deformation of the conductive structure 100, the material of the substrate 110 may be a material with a certain elasticity. In some embodiments, the material of the substrate 110 may include but is not limited to the TPU, the EVA, the PDMS, the Ecoflex, the resin, the silicone polymer material, etc.

Since the first vertical contact surface 1242 faces the first accommodation region 140 and is located at a position near a bottom of the accommodation groove 112, when the fluid conductor 130 deforms under the action of the external pressure, the deformation caused by the external pressure is difficult to be transmitted to the bottom of the accommodation groove 112, the connection between the solid conductor 120 and the fluid conductor 130 at the first vertical contact surface 1242 may maintain stable. When the conductive structure 100 deforms under the action of the pressure, since the first vertical contact surface 1242 exists between the fluid conductor 130 and the solid conductor 120, the stable connection between the fluid conductor 130 and the solid conductor 120 is guaranteed. In addition, when the conductive structure 100 deforms under the action of the pressure (e.g., when the external pressure is applied to the first horizontal contact surface 1241), the fluid conductor 130 may be squeezed downward along the depth direction of the accommodation groove 112, and the fluid conductor 130 may deviate and the thickness of the fluid conductor 130 may decrease. If the fluid conductor 130 undergoes a large-scale offset, the fluid conductor 130 in the first accommodation region 140 may supplement the fluid conductor at the offset position, such that the fluid conductor 130 may still maintain stable contact with the first horizontal contact surface 1241, thereby further preventing a large change in the contact impedance between the solid conductor 120 and the fluid conductor 130. Therefore, by setting the first horizontal contact surface 1241 and the first vertical contact surface 1242 of the step structure, the fluid conductor 130 and the solid conductor 120 can maintain a stable connection, such that the contact impedance between the solid conductor 120 and the fluid conductor 130 changes slightly during the deformation of the conductive structure 100, thereby improving the stability of the output electrical signal of the conductive structure 100.

In some embodiments, the first conductor portion 122 and the second conductor portion 124 may not form the step structure. The second conductor portion 124 may be bonded and connected in the accommodation groove 112, and contact with a side wall (e.g., the left side wall of the accommodation groove 112 as shown in FIG. 1) of the accommodation groove 112 away from the first accommodation region 140. The upper surface of the second conductor portion 124 may be lower than the upper surface of the substrate 110. In this way, the second conductor portion 124 may be completely immersed in the fluid conductor 130. At this time, the fluid conductor 130 may contact with the second conductor portion 124, and the contact surface may include the first horizontal contact surface 1241 and the first vertical contact surface 1242 of the second conductor portion 124. The substrate 110 may be provided with a through hole. The through hole may be communicated with the accommodation groove 112. The first conductor portion 122 may be disposed in the through hole. One end of the first conductor portion 122 may be electrically connected with the second conductor portion 124, and the other end of the first conductor portion 122 may extend outside the through hole. In other words, an opening of one end of the through hole close to the accommodation groove 112 may be located on the side wall of the accommodation groove 112 contacting with the second conductor portion 124. In this case, the first conductor portion 122 may be used as a solid electrode (or a lead) of the conductive structure 100 to connect the conductive structure 100 to the external circuit. It should be noted that in order to prevent the fluid conductor 130 from leaking from the through hole, a sealing effect can be achieved when the first conductor portion 122 is mounted in the through hole. The sealing effect may be achieved by coupling the through hole with the first conductor portion 122, or by other sealing settings (e.g., applying a sealant, heating and melting a hot pressing material to achieve bonding and sealing, etc.). In some embodiments, along the depth direction of the accommodation groove 112, the arrangement of the first conductor portion 122 and the through hole may be determined according to an actual condition, as long as the first conductor portion 122 contacts with the second conductor portion 124 to achieve electrical connection, which is not limited in the present disclosure. For example, the through hole may be arranged obliquely, i.e., the first conductor portion 122 may also be arranged obliquely, and the first conductor portion 122 may contact with a side of the second conductor portion 124 away from the first accommodation region 140, or may contact with a bottom of the second conductor portion 124.

In some embodiments, the conductive structure 100 may further include a protective layer (not shown in the figure). The protective layer may at least cover the surface of the solid conductor 120 and the fluid conductor 130 to protect the solid conductor 120 and the fluid conductor 130 to prevent the solid conductor 120 from falling off or the fluid conductor 130 from leaking. In some embodiments, the protective layer may also cover the solid conductor 120, the fluid conductor 130, and the substrate 110 simultaneously, so as to protect the solid conductor 120 and the fluid conductor 130 while strengthening the interconnection between the solid conductor 120, the fluid conductor 130, and the substrate 110, and prevent the conductive structure 100 from being disconnected from each other during deformation by the external pressure, thereby further improving the stability and mechanical reliability of the conductive structure 100. In some embodiments, the protective layer may include a flexible insulating film. The material of the flexible insulating film may include insulating resin materials such as polyimide (PI) and polyvinyl chloride (PVC). In some embodiments, the protective layer may also include an insulating conformal coating or insulating ink.

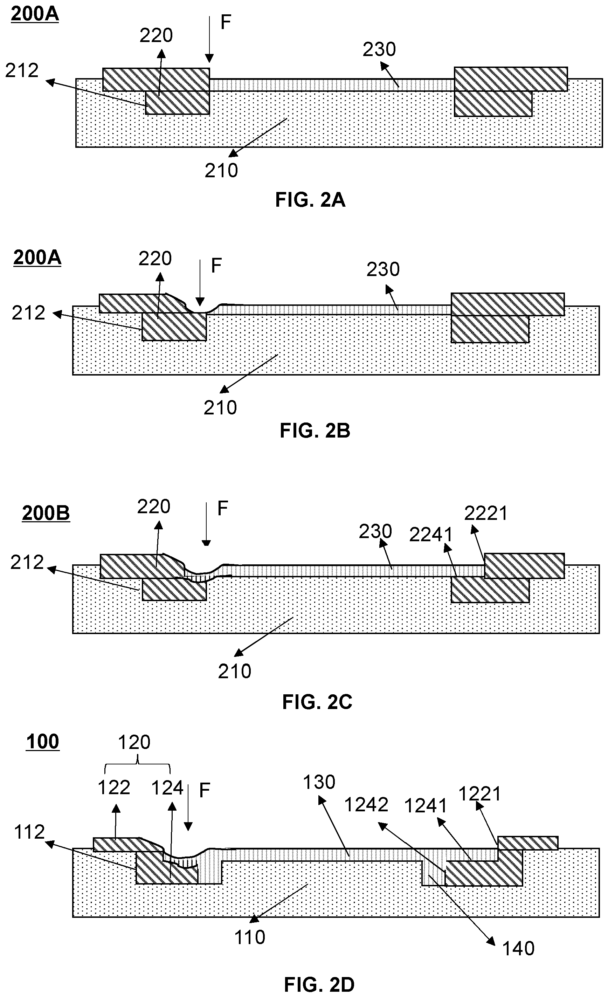

FIG. 2A is a schematic diagram illustrating an exemplary conductive structure in an unstressed state according to some embodiments of the present disclosure. FIG. 2B is a schematic diagram illustrating the conductive structure in FIG. 2A in a stressed state. FIG. 2C is a schematic diagram illustrating an exemplary conductive structure in a stressed state according to some embodiments of the present disclosure. FIG. 2D is a schematic diagram illustrating an exemplary conductive structure in a stressed state according to some embodiments of the present disclosure.

According to a conductive structure 200A shown in FIG. 2A, a projection of a contact region between a fluid conductor 230 and a solid conductor 220 along a depth direction of an accommodation groove 212 and a projection of the solid conductor 220 along the depth direction may have no overlapping region, and the solid conductor 220 and the accommodation groove 212 may not form a first accommodation region. Referring to FIG. 2A and FIG. 2B, when the conductive structure 200A (e.g., a contact surface between the solid conductor 220 and the fluid conductor 230) deforms under the action of pressure, since there is no horizontal contact surface between the solid conductor 220 and the fluid conductor 230 of the conductive structure 200A, a substrate 210 may deform during the process of the conductive structure 200A being subjected to a pressure F, which causes the fluid conductor 230 to be offset at a contact position between the solid conductor 220 and the fluid conductor 230. When the amount of the fluid conductor at the contact position decreases, the contact area between the solid conductor 220 and the fluid conductor 230 may decrease, and the impedance of the contact position between the fluid conductor 230 and the solid conductor 220 may change, which eventually affects an output electrical signal of the conductive structure 200A, making the output electrical signal of the conductive structure 200A unstable and causing the conductive structure 200A to be overly sensitive to the external pressure.

In order to suppress the fluid conductor from offsetting at the contact position between the fluid conductor and the solid conductor when the conductive structure is subjected to the external pressure, as shown in FIG. 2C, some embodiments of the present disclosure provide a conductive structure 200B. In the conductive structure 200B, the solid conductor 220 may include a step structure, but the solid conductor 220 and the accommodation groove 212 do not form a first accommodation region. Referring to FIG. 2C, when the solid conductor 220 of the conductive structure 200B includes the step structure, a contact surface between the solid conductor 220 and the fluid conductor 230 may include a horizontal contact surface 2241 and a vertical contact surface 2221. Due to the horizontal contact surface 2241, the solid conductor 220 and the fluid conductor 230 may have a relatively large contact area, and in the lateral distribution of contact, even if the fluid conductor 230 is squeezed downward and becomes thinner when subjected to the external pressure, it is difficult to disconnect the fluid conductor 230 and the solid conductor 220, and the fluid conductor 230 may still maintain in contact with the solid conductor 220 on the horizontal contact surface 2241. Therefore, the fluid conductor 230 and the solid conductor 220 may still retain good conductive properties, and the impedance of the contact position between the fluid conductor 230 and the solid conductor 220 may not have a large change, thereby ensuring the stability of the output electrical signal of the conductive structure 200B.

In order to further suppress the fluid conductor offsetting at the contact position between the fluid conductor and the solid conductor when the conductive structure is subjected to the external pressure, as shown in FIG. 2D, some embodiments of the present disclosure provide the conductive structure 100. In the conductive structure 100, the solid conductor 120 may include a step structure, and the solid conductor 120 and the accommodation groove 112 may form the first accommodation region 140. Referring to FIG. 1 and FIG. 2D, when the conductive structure 100 includes both the solid conductor 120 with the step structure and the first accommodation region 140, the first horizontal contact surface 1241 of the step structure can ensure the stability of the output electrical signal of the conductive structure 100. At the same time, with the setting of the first accommodation region 140, the fluid conductor 130 in the first accommodation region 140 may be used for supplementing when the fluid conductor 130 has an offset over a large range due to the external pressure, so as to minimize the change in the contact area between the fluid conductor 130 and the solid conductor 120, thereby further preventing the change in the contact impedance between the fluid conductor 130 and the solid conductor 120, and improving the stability of the output electrical signal of the conductive structure 100.

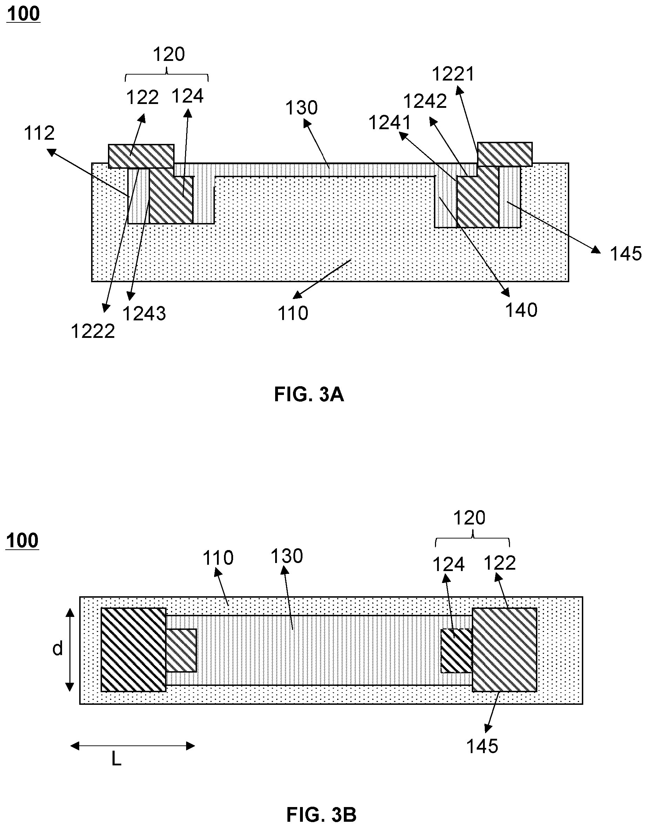

FIG. 3A is a schematic structural diagram illustrating another exemplary conductive structure according to some embodiments of the present disclosure. FIG. 3B is a top view of the conductive structure in FIG. 3A. As shown in FIG. 3A and FIG. 3B, in some embodiments, when the second conductor portion 124 is fixedly disposed in the accommodation groove 112 (e.g., when the second conductor portion 124 is fixedly disposed in the accommodation groove 112 and does not contact with a side wall of the accommodation groove 112), a second accommodation region 145 may be further formed between the solid conductor 120 and the accommodation groove 112, and the second accommodation region 145 may be communicated with the first accommodation region 140 to accommodate the fluid conductor 130.

In some embodiments, a projection of the second accommodation region 145 along a depth direction of the accommodation groove and a projection of the solid conductor 120 along the depth direction of the accommodation groove may have a second overlapping region. That is, in the depth direction of the accommodation groove 112, at least part of the solid conductor 120 may be located above and in contact with the second accommodation region 145. In some embodiments, the second conductor portion 124 may be disposed in the accommodation groove 112, and in a width direction of the conductive structure 100 (i.e., a direction d shown in FIG. 3B), the size of the second conductor portion 124 may be less than the size of the accommodation groove 112 (as shown in FIG. 3B ), such that the first accommodation region 140 and the second accommodation region 145 may be respectively located on two sides of the second conductor portion 124, and the first accommodation region 140 and the second accommodation region 145 may be communicated through a gap between the second conductor portion 124 and the inner wall of the accommodation groove 112. In some embodiments, in the width direction of the conductive structure 100 (i.e., the direction d shown in FIG. 3B), the size of the first conductor portion 122 may be greater than the size of the accommodation groove 112, as shown in FIG. 3B, such that the first conductor portion 122 may be lapped on the substrate 110 outside the accommodation groove 112. In some embodiments, the size of the first conductor portion 122 in the width direction of the conductive structure 100 may also be less than or equal to the size of the accommodation groove 112, as long as the length of the first conductor portion 122 in a length direction of the conductive structure 100 ( i.e., a direction L shown in FIG. 3B) satisfies that two ends of the first conductor portion 122 can be connected with the substrate 110 and the second conductor portion 124, respectively, so as to facilitate the fixation of the first conductor portion 122.

Since the first conductor portion 122 has a relatively large rigidity, when the conductive structure 100 deforms under the action of a force, the first conductor portion 122 located above the fluid conductor 130 may provide certain protection and support to the fluid conductor 130, thereby reducing the deformation degree of the fluid conductor 130 to a certain extent.

By setting the second accommodation region 145, a contact surface between the solid conductor 120 and the fluid conductor 130 may further include a second horizontal contact surface 1222 of the first conductor portion 122 facing the second conductor portion 124 and a third vertical surface 1243 of the second conductor portion 124 facing the second accommodation region 145. Therefore, the setting of the second accommodation region 145 can increase a contact surface area between the solid conductor 120 and the fluid conductor 130, further improve the impedance stability of a contact position between the solid conductor 120 and the fluid conductor 130, and ensure the stability of an output electrical signal of the conductive structure 100. In addition, when the fluid conductor 130 has an offset over a large range, the fluid conductor 130 in the first accommodation region 140 and the second accommodation region 145 may simultaneously supplement the fluid conductor at an offset position, further improving the connection stability between the fluid conductor 130 and the solid conductor 120, avoiding the disconnection of the fluid conductor 130 from the solid conductor 120, preventing a large change in the contact impedance between the fluid conductor 130 and the solid conductor 120, and improving the stability of the output electrical signal of the conductive structure 100.

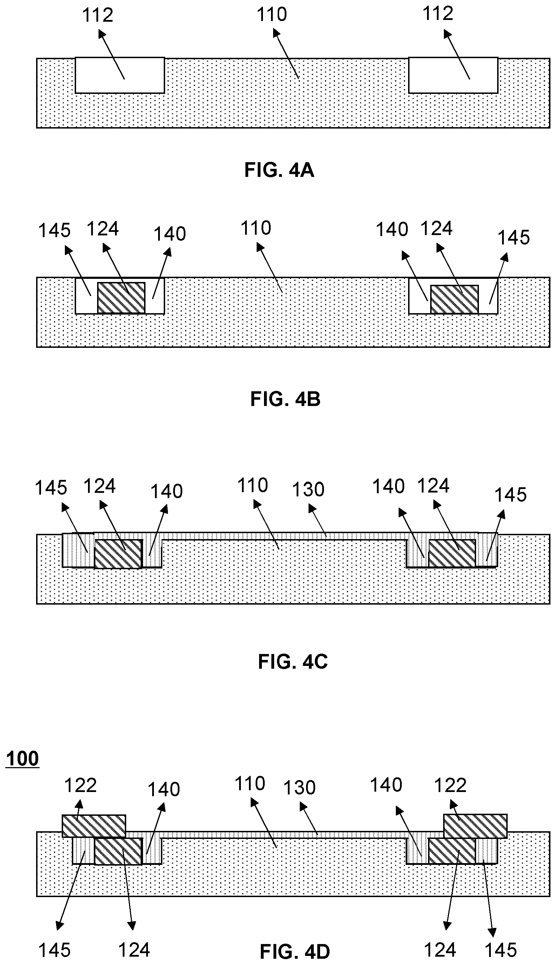

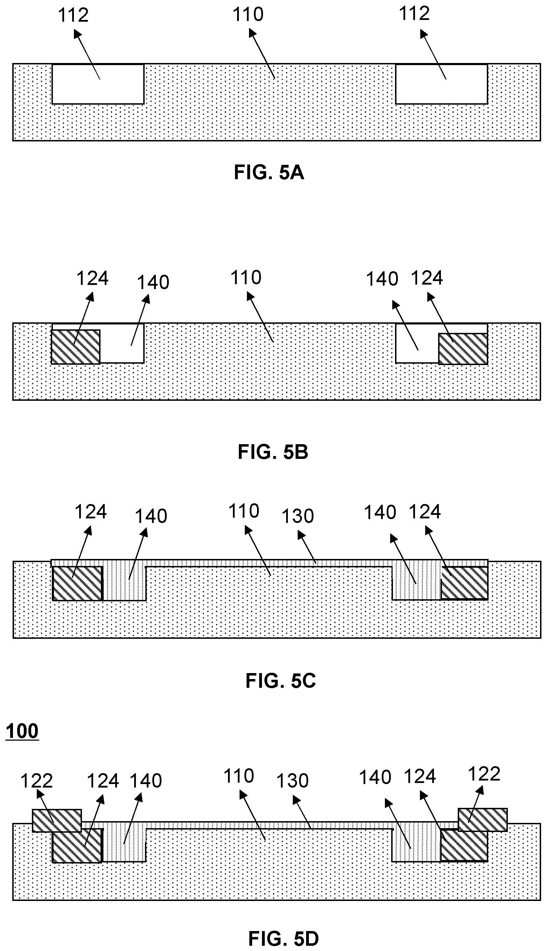

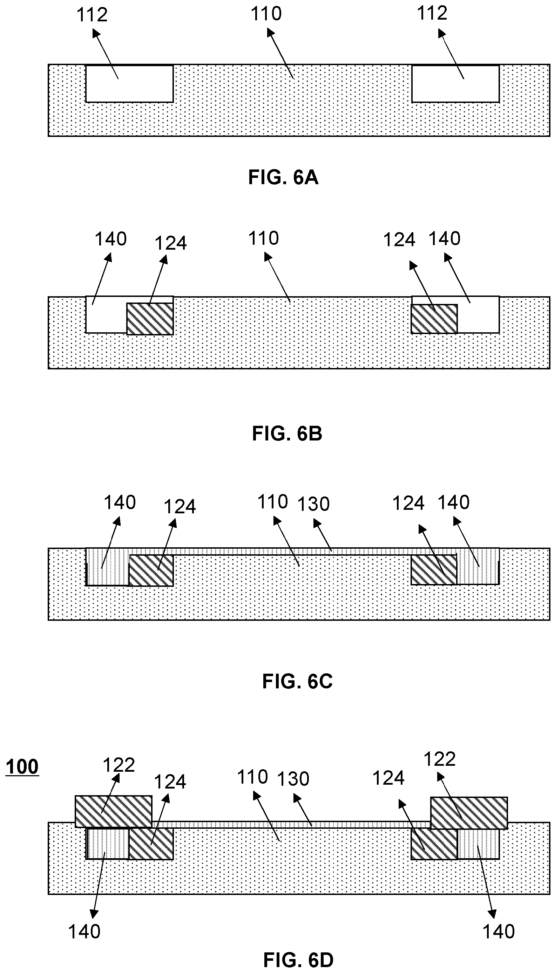

FIGs. 4A-4D are schematic diagrams illustrating a process flow of an exemplary conductive structure according to some embodiments of the present disclosure. FIGs. 5A-5D are schematic diagrams illustrating a process flow of another exemplary conductive structure according to some embodiments of the present disclosure. FIGs. 6A-6D are schematic diagrams illustrating a process flow of another exemplary conductive structure according to some embodiments of the present disclosure. The conductive structure 100 shown in FIG. 4D may include the first accommodation region 140 and the second accommodation region 145. The conductive structure 100 shown in FIG. 5D may include only the first accommodation region 140. The conductive structure 100 shown in FIG. 6D may include only another first accommodation region 140. The preparation processes of the conductive structures shown in FIG. 4D, FIG. 5D, and FIG. 6D may be similar. For example, each of the preparation processes of the conductive structures shown in FIG. 4D, FIG. 5D, and FIG. 6D may include 4 operations.

Specifically, referring to 4A, 5A, and 6A, in the first operation, the accommodation groove 112 may be processed on the substrate 110 by using a patterning process. In some embodiments, the patterning process may include but is not limited to laser, hot pressing, photolithography, and other processes, which is not limited in the present disclosure.

Referring to FIG. 4B, FIG. 5B, and FIG. 6B, in the second operation, the second conductor portion 124 may be mounted in the accommodation groove 112. In some embodiments, the second conductor portion 124 may be bonded to an inner wall of the accommodation groove 112 through an adhesive medium. In some embodiments, the bonding may also be achieved by the deformation ability of the second conductor portion 124 and the substrate 110. For example, when the second conductor portion 124 is a conductive tape (e.g., a single-sided conductive tape or a double-sided conductive tape), the conductive tape may be directly bonded in the accommodation groove 112 of the substrate 110. In some embodiments, the second conductor portion 124 may be placed in a middle region of the accommodation groove 112, and the second conductor portion 124 may not be in contact with the side wall of the accommodation groove 112. In this case, the first accommodation region 140 and the second accommodation region 145 may be formed between the second conductor portion 124 and the accommodation groove 112 simultaneously, as shown in FIG. 4B. In some embodiments, the second conductor portion 124 may be disposed in contact with the side wall of the accommodation groove 112, and only the first accommodation region 140 may be formed between the second conductor portion 124 and the accommodation groove 112. By contacting the second conductor portion 124 with the side wall of the accommodation groove 112 at different positions, the positions of the formed first accommodation region 140 may be correspondingly different, as shown in FIG. 5B and FIG. 6B.

Referring to FIG. 4C, FIG. 5C, and FIG. 6C, in the third operation, the fluid conductor 130 may be filled into the accommodation groove 112, and the fluid conductor 130 may extend outside of the accommodation groove 112. In some embodiments, before filling the fluid conductor 130, the patterning process may be performed on the substrate 110 again such that a surface of the substrate 110 between the two first accommodation regions 140 may be lower than surfaces at two ends of the substrate 110, the substrate may form a groove structure for accommodating the fluid conductor 130 between the two solid conductors 120. It should be noted that performing the patterning process again should avoid affecting the second conductor portion 124 and the accommodation groove 112 as much as possible. For example, when two accommodation grooves 112 are provided on the substrate 110, a groove may be processed on the substrate 110 by the patterning process, and the groove may be located between the two accommodation grooves 112 and communicated with the two accommodation grooves 112 simultaneously.

Referring to FIG. 4D, FIG. 5D, and FIG. 6D, in the fourth operation, the first conductor portion 122 may be placed. In some embodiments, the first conductor portion 122 may be placed and bonded on the second conductor portion 124. In some embodiments, the first conductor portion 122 may be bonded to the second conductor portion 124 through the adhesive medium, or may be bonded through the deformation ability of the second conductor portion 124 and the first conductor portion 122. It should be noted that when the second conductor portion 124 is suspended relative to the accommodation groove 112, the first conductor portion 122 may be bonded to the second conductor portion 124 first, and after the fluid conductor 130 is filled, the first conductor portion 122 may be bonded to the substrate 110 near an opening of the accommodation groove 112.

In some embodiments, the conductive structure 100 may be packaged with a protective layer (not shown in the figure) to protect the conductive structure 100 and prevent the solid conductor 120 from falling off or the fluid conductor 130 from leaking. Meanwhile, the interconnection between the solid conductor 120, the fluid conductor 130, and the substrate 110 may be strengthened to prevent the conductive structure 100 from being disconnected during the deformation caused by external pressure, thereby further improving the stability and the mechanical reliability of the conductive structure 100. In some embodiments, a material of the protective layer may be the same as that of the substrate 110.

In a flexible sensor, in order to enhance the reliability and the deformation ability of the flexible sensor, the fluid conductor may be used. However, since it is difficult to avoid using a lead structure (i.e., a solid conductor) in the process, there is a contact region between the fluid conductor and the solid conductor. When the contact region deforms, since the deformation ability of the fluid is much stronger than that of the solid, the fluid conductor may offset first, while the solid may not be easy to deform, such that a contact morphology of the fluid conductor and the solid conductor may change greatly, resulting in a large change in the electrical impedance performance of the conductive structure, and finally the signal may be greatly affected by the pressure. Therefore, in some embodiments, by applying the conductive structure 100 to the flexible sensor (e.g., a flexible capacitive sensor or a flexible resistive sensor), since there is a relatively stable contact surface between the fluid conductor 130 and the solid conductor 120 in the conductive structure 100, the flexible sensor does not cause a large change in the electrical impedance at a contact position between the fluid conductor 130 and the solid conductor 120 when the pressure deformation occurs, thereby stabilizing the signal of the flexible sensor and increasing the reliability.

FIG. 7A is a schematic structural diagram illustrating an exemplary flexible capacitive sensor according to some embodiments of the present disclosure. FIG. 7B is a schematic structural diagram illustrating another exemplary flexible capacitive sensor according to some embodiments of the present disclosure.

Referring to FIG. 7A, some embodiments of the present disclosure further provide a flexible capacitive sensor 700. The flexible capacitive sensor 700 may include at least one sensing structure 710. In some embodiments, each of the at least one sensing structure 710 may include two electrode plates 711 disposed opposite to each other, and a dielectric flexible body 712 disposed between the two electrode plates 711.

Each of the two electrode plates 711 may include the conductive structure 100. Referring to FIG. 1, the conductive structure 100 may include the substrate 110, the solid conductor 120, and the fluid conductor 130. The substrate 110 may include the accommodation groove 112. The solid conductor 120 may be at least partially accommodated in the accommodation groove 112 and may form the first accommodation region 140 with the accommodation groove 112. The fluid conductor 130 may be filled in the first accommodation region 140 and extend outside the accommodation groove 112. A projection of a contact region between the fluid conductor 130 and the solid conductor 120 along a depth direction of the accommodation groove 112 and a projection of the solid conductor 120 along the depth direction may have an overlapping region. More descriptions regarding the conductive structure 100 may be found in the descriptions of the conductive structure 100, which are not repeated here.

In the flexible capacitive sensor 700, the fluid conductor 130 extending outside the accommodation groove 112 may be used as a plate body of each of the two electrode plates 711, such that the flexible capacitive sensor 700 may have a relatively large flexibility. The solid conductor 120 may connect the fluid conductor 130 to an external circuit (e.g., a processor) to achieve a stable signal connection with an external circuit. It should be noted that FIGs. 7A-7B only show that one end of each of the two electrode plates 711 is provided with the solid conductor 120. It should be noted that in some cases, two ends of the electrode plate 711 may be provided with the solid conductor 120 simultaneously to transmit an electrical signal of the fluid conductor 130 to the external circuit, which is not limited in the present disclosure.

The two electrode plates 711 may be oppositely arranged on two sides (e.g., upper and lower sides as shown in FIG. 7A) of the dielectric flexible body 712. The orientation of the two electrode plates 711 relative to the dielectric flexible body 712 is not limited in the present disclosure, as long as it is easy to implement. Due to the isolation of the dielectric flexible body 712, the two electrode plates 711 may be regarded as an open circuit, and the two electrode plates 711 and the dielectric flexible body 712 may be regarded as a capacitor, and a capacitance value of the capacitor may be denoted as C. The dielectric flexible body 712 may deform under the action of an external force to change electrical signals of the two electrode plates 711, thereby changing the capacitance value C of the capacitor. The change in the capacitance value C may reflect a change in a distance between the two electrode plates 711. Further, in some embodiments, the flexible capacitive sensor 700 may further include a processor. The processor may be configured to determine the deformation of the flexible capacitive sensor 700 based on the electrical signals of the two electrode plates 711.

In some embodiments, the at least one sensing structure 710 may include two or more sensing structures, such as a first sensing structure 7101 and a second sensing structure 7102 as shown in FIG. 7B. The first sensing structure 7101 and the second sensing structure 7102 may be located on two sides of a flexible matrix 720, respectively. It should be noted that the material of the dielectric flexible body 712 and/or the flexible matrix 720 may be the same as or different from the material of the substrate 110, which is not limited here. The first sensing structure 7101 and the second sensing structure 7102 may output corresponding electrical signals (e.g., capacitance values C1 and C2), respectively. The processor may be configured to determine the deformation of the flexible capacitive sensor 700 according to the electrical signal (i.e., the capacitance value C1) generated by the first sensing structure 7101 and the electrical signal (i.e., the capacitance value C2) generated by the second sensing structure 7102.

In some embodiments, environmental factors such as temperature and power frequency may affect a sensing result of the sensing structure, which in turn affects the measurement accuracy of the flexible capacitive sensor 700. In order to suppress the influence of the above environmental factors, a sensing unit with two sensing structures may be constructed. The two sensing structures may be connected together through the flexible matrix 720. An external force may act on the two sensing structures simultaneously. The processor may process a difference between the two sensing structures of the sensing unit. In this case, the environmental factors such as the temperature and the power frequency may serve as common mode signals between the two sensing structures of the sensing unit. In some embodiments, when the flexible capacitive sensor 700 is configured to measure a bending deformation, symmetrical external forces such as a stretching signal and a symmetrical pressure may also affect the sensing result of the sensing structure, which in turn affects the accuracy of the flexible capacitive sensor 700 in measuring the bending deformation. For example, when the symmetrical pressure is applied to the flexible capacitive sensor 700, the electrical impedance of a contact position between the solid conductor 120 and the fluid conductor 130 may change, thereby making an electrical signal correspondingly asymmetrical, losing the suppression effect on the common mode signals, and affecting the accuracy of the flexible capacitive sensor 700 in measuring the bending deformation. In order to suppress the influence of the external symmetrical force, the flexible capacitive sensor 700 may include the sensing unit having two sensing structures, and the two sensing structures may be connected together through the flexible matrix 720. In this case, the temperature, the power frequency, the stretching signal, the symmetrical pressure, etc., may all be used as the common mode signals between the two sensing structures of the sensing unit. The processor may process the difference between the two sensing structures of the sensing unit to filter the common mode signals, thereby amplifying a differential mode signal, improving the stability of the flexible capacitive sensor 700 to the external factors and improving the accuracy of the flexible capacitive sensor 700 in measuring the bending deformation. Specifically, referring to FIG. 7B, when the flexible capacitive sensor 700 is used to measure the bending deformation, the sensing unit may include the first sensing structure 7101 and the second sensing structure 7102. The first sensing structure 7101 and the second sensing structure 7102 may be respectively fixed on two sides of the flexible matrix 720. When the flexible matrix 720 bends (e.g., bends towards a side where the first sensing structure 7101 is located), capacitance values of the two sensing structures may increase and decrease, respectively. In this case, the processor may process a difference between the capacitance C1 of the first sensing structure 7101 and the capacitance C2 of the second sensing structure 7102, so as to suppress the common mode signals (e.g., capacitance changes caused by the temperature, the stretching signal, the symmetrical pressure, etc.) between the first sensing structure 7101 and the second sensing structure 7102, and amplify the differential mode signal (i.e., the capacitance change caused by deformation bending, etc.), thereby improving the stability of the flexible capacitive sensor 700 to the external factors and improving the accuracy of the flexible capacitive sensor 700 in measuring the bending deformation.

In some embodiments, the flexible capacitive sensor 700 may include a sensing unit. For AR/VR gloves, the sensing unit may be disposed in a back region (e.g., covering a plurality of joints of the fingers) of the fingers. When a user bends the fingers, bending degrees of different positions of the sensing unit may correspond to bending degrees of different regions of the fingers. Different portions of a certain sensing structure may have different sub-capacitances, and the capacitance of the sensing structure may be equivalent to being composed of sub-capacitors disposed at different portions in parallel. The processor may recognize a difference between two capacitances corresponding to the first sensing structure 7101 and the second sensing structure 7102, which may reflect a sum of the differences of all the sub-capacitances, thereby reflecting an overall bending deformation of the fingers. It should be noted that when the user bends the fingers, if wrinkles appear in the AR/VR gloves, since the two sensing structures of the sensing unit are connected together through the flexible matrix 720, for different positions, the bending signals generated by the wrinkles at a position may be simultaneously reflected in the two sub-capacitances corresponding to the position, and since a bending deformation state of the flexible capacitive sensor 700 or the AR/VR glove is determined by the sum of the differences in the sub-capacitance values corresponding to each position, directions (i.e., positive and negative) of the differences in the sub-capacitance values at different positions caused by the wrinkles may be different, but the capacitance changes caused by the wrinkles may be eventually be cancelled, such that the flexible capacitive sensor 700 is not affected by the wrinkles, thereby improving the measurement accuracy of the flexible capacitive sensor 700.

In some embodiments, the flexible capacitive sensor 700 may include a plurality of sensing units. The processor may jointly determine the bending deformation of the flexible capacitive sensor 700 based on signals of the plurality of sensing units, thereby improving the accuracy of the flexible capacitive sensor 700. For example, for AR/VR gloves, the flexible capacitive sensor 700 may include the plurality of sensing units. Each of the plurality of sensing units may cover a joint of the finger. The processor may determine the bending degree of each joint based on the plurality of sensing units.

In some embodiments, the sensing unit may include two sensing structures separated from each other, i.e., the two sensing structures may not be connected together through the flexible matrix 720. For example, for AR/VR gloves, the two sensing structures of the sensing unit may be arranged on the back of the fingers and the corresponding inside of the fingers, respectively. When the user bends the fingers, the processor may determine a difference in capacitance values of the sensing structures corresponding to the inside and the back of the fingers, respectively, so as to determine the bending deformation state of the flexible capacitive sensor 700 or the whole or the fingers of the AR/VR gloves.

In some embodiments of the present disclosure, by adopting the two electrode plates 711 having the conductive structure 100, the conductive structure of each of the two electrode plates 711 enables a horizontal contact surface to be disposed between the solid conductor and the fluid conductor. In addition, the first accommodation region and/or the second accommodation region can be used to supplement the fluid conductor that has an offset over a large range. When the flexible capacitive sensor 700 deforms under the action of a force, the fluid conductor is squeezed downward in the depth direction and becomes thinner when subjected to the external pressure, but the connection between the fluid conductor and the solid conductor is still maintained, such that the impedance characteristics of the contact position between the fluid conductor and the solid conductor do not change much, and the electrical signal output by the conductive structure of each of the two electrode plates 711 does not change much, thereby reducing the error of the capacitance test of the flexible capacitive sensor 700.

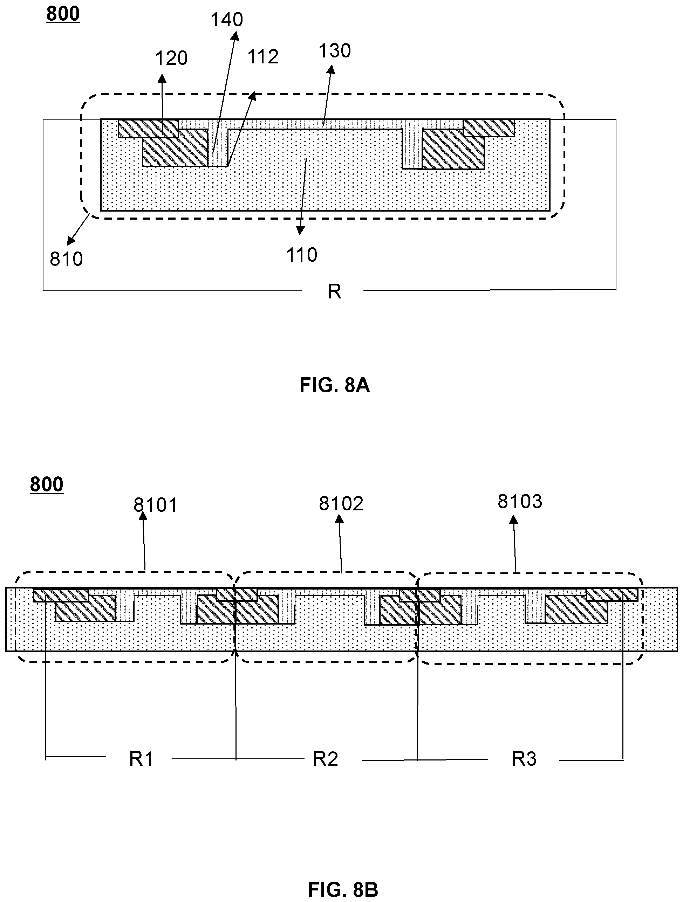

FIG. 8A is a schematic structural diagram illustrating an exemplary flexible resistive sensor according to some embodiments of the present disclosure. FIG. 8B is a schematic structural diagram illustrating another exemplary flexible resistive sensor according to some embodiments of the present disclosure.

In some embodiments, as shown in FIG. 8A, when a resistance of the fluid conductor 130 of the conductive structure 100 can change with deformations such as bending, stretching, and/or compression of the fluid conductor 130, the conductive structure 100 may be used as a sensing structure 810 of a flexible resistive sensor 800. In addition, the flexible resistive sensor 800 may also include a processor (not shown in the figure). The substrate 110 may be used as a carrier of the fluid conductor 130. The resistance of the fluid conductor 130 may change with the state of the fluid conductor. For example, the fluid conductor 130 may include but is not limited to gallium-based liquid metal, a conductive carbon paste, conductive ink, conductive silicone, or the like, or other fluids based on conductors and non-conductors doped with organic solvents. The substrate 110 may deform in a way of bending, stretching, and/or compression under the action of an external force, thereby causing the fluid conductor 130 to deform in a way of bending, stretching, and/or compression. In some embodiments, as shown in FIG. 8A, when the flexible resistive sensor 800 bends downward, the substrate 110 may drive the fluid conductor 130 to bend downward. In this case, an upper surface of the fluid conductor 130 may be stretched and a lower surface of the fluid conductor 130 may be compressed, thereby causing the resistance value of the fluid conductor 130 to change. The solid conductor 120 may transmit an electrical signal (e.g., a resistance R or a resistance change) of the fluid conductor 130 to the processor for processing. The change in the resistance R may reflect the deformation of the fluid conductor 130. The processor may be configured to determine the deformation of the flexible resistive sensor 800 or a target subject based on the resistance R.

In some embodiments, the flexible resistive sensor may include a plurality of sensing structures 810 connected in series, and each of the plurality of sensing structures 810 may correspond to a resistor. As shown in FIG. 8B, the flexible resistive sensor 800 may include a first sensing structure 8101, a second sensing structure 8102, and a third sensing structure 8103 connected in series. In this case, the first sensing structure 8101, the second sensing structure 8102, and the third sensing structure 8103 may output corresponding resistances R1, R2, and R3, respectively, as shown in FIG. 8B. In some embodiments, a solid conductor may be shared between every two adjacent sensing structures 810 of the plurality of sensing structures 810, such that more sensing structures 810 may be arranged in the same area. The more sensing structures, the greater the accuracy of the stretching position that can be measured by the flexible resistive sensor 800, which is of great significance for applying the flexible resistive sensor 800 to the human-machine interaction fields such as a wearable device (e.g., a myoelectric suit, an AR device, and a VR device). For example, the flexible resistive sensor 800 may be applied to AR/VR gloves, and the plurality of sensing structures 810 corresponding to a periphery of user's wrist may be disposed in the AR/VR gloves. When the user's wrist bends in different directions, the sensing structures corresponding to the periphery of the user's wrist may be stretched or compressed under the driving of the bending of the user's wrist. The position of a stretched or compressed sensing structure may be determined by the change in the resistance value of each sensing structure, so as to determine the bending direction of the user's wrist.

In some embodiments of the present disclosure, by adopting the conductive structure 100, when the flexible resistive sensor 800 deforms under the action of a force, the fluid conductor is squeezed downward in the depth direction and becomes thinner when subjected to the external pressure, but the connection between the fluid conductor and the solid conductor is still maintained, such that the impedance characteristics of the contact position between the fluid conductor and the solid conductor do not change much, avoiding the pressure from the surface of the flexible resistive sensor to cause a change over a large range in the measured resistance R, reducing the error of the resistance test of the flexible resistive sensor, and thus making the resistance R more accurately reflect the bending deformation of the flexible resistive sensor.

The beneficial effects of the conductive structure provided by some embodiments of the present disclosure include but are not limited to the following content: (1) the projection of the contact region between the fluid conductor and the solid conductor along the depth direction of the accommodation groove and the projection of the solid conductor along the depth direction have an overlapping region, thereby increasing the contact area between the solid conductor and the fluid conductor, reducing the impedance change in the contact position between the solid conductor and the fluid conductor, and improving the stability of the output electrical signal of the conductive structure; (2) by setting the first accommodation region, when the fluid conductor has an offset over a large range, the fluid conductor in the first accommodation region can supplement the fluid conductor missing at the deformation position, further ensuring the connection between the fluid conductor and the solid conductor, and improving the stability of the output electrical signal of the conductive structure; (3) by setting the second accommodation region, the contact area between the solid conductor and the fluid conductor is further increased, and the stability of the connection contact between the solid conductor and the fluid conductor is improved; (4) by increasing the roughness of the accommodation groove of the substrate and/or the surface of the solid conductor, the contact area between the solid conductor and the fluid conductor is increased, and the stability of the connection contact between the solid conductor and the fluid conductor is further improved; (5) the projection of the contact region between the fluid conductor and the solid conductor along the depth direction of the accommodation groove and the projection of the solid conductor along the depth direction have an overlapping region, thereby increasing the contact area between the solid conductor and the fluid conductor, reducing the impedance change in the contact position between the solid conductor and the fluid conductor, and improving the stability of the output electrical signal of the electrode plate, thereby enhancing the stability of the flexible sensor; (6) for the flexible capacitive sensor having two sensing structures in parallel, the difference in the capacitance values of the two sensing structures is extracted using the processor to filter out the common mode signals (e.g., the temperature, the symmetrical pressure, etc.) and amplify the differential mode signals (e.g., the deformation bending, etc.), thereby improving the stability of the flexible capacitive sensor; and (7) by arranging the plurality of sensing structures in the flexible resistive sensor and connecting the plurality of sensing structures in series, the accuracy of the flexible resistive sensor in determining the stretching position is improved. It should be noted that different embodiments may produce different beneficial effects. In different embodiments, the beneficial effects that may be produced may be any one or a combination of the above, or any other beneficial effects that may be obtained.

The basic concepts have been described above. Obviously, for those skilled in the art, the above detailed disclosure is only for example and does not constitute a limitation of the present disclosure. Although not explicitly stated here, those skilled in the art may make various modifications, improvements, and corrections to the present disclosure. Such modifications, improvements, and corrections are suggested in the present disclosure, so such modifications, improvements, and corrections still belong to the spirit and scope of the exemplary embodiments of the present disclosure.

## Claims

1. A conductive structure, comprising:
a substrate including an accommodation groove;
a solid conductor at least partially accommodated in the accommodation groove, wherein the solid conductor and the accommodation groove form a first accommodation region; and
a fluid conductor filled in the first accommodation region and extending outside the accommodation groove, wherein a projection of a contact region of the fluid conductor and the solid conductor along a depth direction of the accommodation groove and a projection of the solid conductor along the depth direction have an overlapping region.

2. The conductive structure of claim 1, wherein the solid conductor includes a first conductor portion and a second conductor portion, the first conductor portion and the second conductor portion forming a step structure.

3. The conductive structure of claim 2, wherein the fluid conductor is in contact with a plurality of surfaces of the step structure, the plurality of surfaces including a first horizontal contact surface of the second conductor portion facing the first conductor portion, a first vertical contact surface of the second conductor portion facing the first accommodation region, and a second vertical contact surface of the first conductor portion facing the first accommodation region.

4. The conductive structure of claim 3, wherein the first conductor portion is bonded and connected above the second conductor portion, and the second conductor portion is bonded and connected on a bottom wall of the accommodation groove or is suspended in the accommodation groove.

5. The conductive structure of claim 2, wherein projections of the first conductor portion and the second conductor portion along the depth direction of the accommodation groove have a non-overlapping region.

6. The conductive structure of claim 1, wherein the solid conductor and the accommodation groove further form a second accommodation region, the second accommodation region being communicated with the first accommodation region to accommodate the fluid conductor.

7. The conductive structure of claim 6, wherein a projection of the second accommodation region along the depth direction of the accommodation groove and the projection of the solid conductor along the depth direction of the accommodation groove have a second overlapping region.

8. The conductive structure of claim 1, wherein the solid conductor includes a conductive tape that is absorbent to the fluid conductor.

9. The conductive structure of claim 1, wherein the solid conductor includes a metal electrode or a conductive coating, the conductive coating being made of an elastomer paste and at least one of graphite, carbon powder, or conductive nanoparticles.

10. The conductive structure of claim 1, wherein the fluid conductor includes liquid metal or conductive oil.

11. The conductive structure of claim 1, wherein an inner wall of the accommodation groove is provided with a rough structure.

12. A flexible sensor, comprising:
at least one sensing structure, wherein each of the at least one sensing structure includes:
two electrode plates which are disposed opposite to each other; and
a dielectric flexible body disposed between the two electrode plates, the dielectric flexible body deforming under action of an external force to change electrical signals of the two electrode plates; wherein each of the two electrode plates includes a conductive structure, the conductive structure including:
a substrate including an accommodation groove;
a solid conductor at least partially accommodated in the accommodation groove, wherein the solid conductor and the accommodation groove form a first accommodation region; and
a fluid conductor filled in the first accommodation region and extending outside the accommodation groove, wherein a projection of a contact region of the fluid conductor and the solid conductor along a depth direction of the accommodation groove and a projection of the solid conductor along the depth direction have an overlapping region.

13. The flexible sensor of claim 12, further comprising a flexible matrix, wherein the at least one sensing structure includes a first sensing structure and a second sensing structure, the first sensing structure and the second sensing structure are disposed on opposite sides of the flexible matrix, respectively, and the flexible sensor further comprises a processor, wherein
the processor is configured to determine a deformation of the flexible sensor based on an electrical signal generated by the first sensing structure and an electrical signal generated by the second sensing structure.

14. The flexible sensor of claim 12, wherein the solid conductor includes a first conductor portion and a second conductor portion, the first conductor portion and the second conductor portion forming a step structure.

15. The flexible sensor of claim 14, wherein the fluid conductor is in contact with a plurality of surfaces of the step structure, the plurality of surfaces including a first horizontal contact surface of the second conductor portion facing the first conductor portion, a first vertical contact surface of the second conductor portion facing the first accommodation region, and a second vertical contact surface of the first conductor portion facing the first accommodation region.

16. The flexible sensor of claim 15, wherein the first conductor portion is bonded and connected above the second conductor portion, and the second conductor portion is bonded and connected on a bottom wall of the accommodation groove or is suspended in the accommodation groove.

17. The flexible sensor of claim 14, wherein projections of the first conductor portion and the second conductor portion along the depth direction of the accommodation groove have a non-overlapping region.

18. The flexible sensor of claim 12, wherein the solid conductor and the accommodation groove further form a second accommodation region, the second accommodation region being communicated with the first accommodation region to accommodate the fluid conductor.

19. The flexible sensor of claim 18, wherein a projection of the second accommodation region along the depth direction of the accommodation groove and the projection of the solid conductor along the depth direction of the accommodation groove have a second overlapping region.

20. The flexible sensor of claim 12, wherein the solid conductor includes a conductive tape that is absorbent to the fluid conductor.
